(19) **Europäisches Patentamt / European Patent Office / Office européen des brevets**

(11) **EP 4 490 802 B1**

(12) **FASCICULE DE BREVET EUROPEEN**

(45) Date de publication et mention de la délivrance du brevet:
**10.06.2026 Bulletin 2026/24**

(21) Numéro de dépôt: **23704364.1**

(22) Date de dépôt: **15.02.2023**

(51) Classification Internationale des Brevets (IPC):
*H01M 10/625* (2014.01)   *H01M 10/6557* (2014.01)
*H01M 10/6567* (2014.01)

(52) Classification Coopérative des Brevets (CPC):
**F28F 3/042; F28F 3/025; F28F 3/044; F28F 3/12; F28F 13/12; H01M 10/613; H01M 10/625; H01M 10/6557; H01M 10/6567;** F28D 2021/0028; H01M 10/6566; Y02E 60/10

(86) Numéro de dépôt international:
**PCT/EP2023/053801**

(87) Numéro de publication internationale:
**WO 2023/169789 (14.09.2023 Gazette 2023/37)**

(54) **DISPOSITIF DE RÉGULATION THERMIQUE, NOTAMMENT DE REFROIDISSEMENT POUR VÉHICULE AUTOMOBILE**

TEMPERIERVORRICHTUNG, INSBESONDERE KÜHLEINRICHTUNG FÜR EIN KRAFTFAHRZEUG

TEMPERATURE CONTROL DEVICE, IN PARTICULAR COOLING DEVICE FOR A MOTOR VEHICLE

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **08.03.2022 FR 2201992**

(43) Date de publication de la demande:
**15.01.2025 Bulletin 2025/03**

(73) Titulaire: **Valeo Electrification**
**95892 Cergy Pontoise (FR)**

(72) Inventeurs:
• **DE VAULX, Cedric**
**78322 Le Mesnil-Saint-Denis Cedex (FR)**
• **ETIENNE, Erwan**
**78322 Le Mesnil-Saint-Denis Cedex (FR)**
• **AZZOUZ, Kamel**
**78322 Le Mesnil-Saint-Denis Cedex (FR)**
• **LHERMITTE, Jean Christophe**
**78322 Le Mesnil-Saint-Denis Cedex (FR)**

(74) Mandataire: **Valeo Powertrain Systems**
**Service Propriété Intellectuelle**
**Immeuble le Delta**
**14, avenue des Béguines**
**95892 Cergy Pontoise (FR)**

(56) Documents cités:
WO-A1-2012/126111     WO-A1-2018/109368
CN-A- 110 970 681      FR-A1- 3 086 048

**Description**

La présente invention concerne un dispositif de régulation thermique, notamment de refroidissement, notamment pour composant électrique susceptible de dégager de la chaleur lors de son fonctionnement, notamment un dispositif de refroidissement d'au moins une batterie ou cellules de batterie de véhicule automobile. En particulier, la présente invention se rapporte à un dispositif de régulation thermique tel que défini par le préambule de la revendication 1, et tel qu'illustré par le document WO2018109368.

Les batteries de véhicules, en particulier pour véhicules électriques ou véhicules hybrides, doivent autant que possible être maintenues à température souhaitée, raison pour laquelle on utilise des dispositifs dits de refroidissement pour batteries de véhicule. Ces dispositifs de refroidissement comprennent des plaques de refroidissement à travers lesquelles circule un fluide de refroidissement. On connaît des dispositifs de refroidissement dans lesquels sont utilisées deux plaques qui sont fixées l'une à l'autre pour former des canaux pour le fluide de refroidissement. Le brevet EP 2 828 922 B1 décrit un tel dispositif.

La demande de brevet WO12126111 décrit un dispositif de refroidissement de cellules de batterie comprenant une paire de plaques complémentaires, la paire de plaques complémentaires formant ensemble un passage d'écoulement ayant une extrémité d'entrée, une extrémité de sortie et des creux ou des nervures sur la longueur du passage d'écoulement.

L'invention vise à proposer des dispositifs de régulation thermique améliorés.

L'invention propose ainsi un dispositif de régulation tel que défini par la revendication 1.

Les coins du trapèze peuvent être arrondis.

Le fluide caloporteur peut être un fluide réfrigérant, notamment un fluide choisi parmi les fluides réfrigérants suivants R134a, R1234yf ou R744 ou un mélange eau/éthylène glycol.

Grâce à l'invention, il est possible de choisir ces éléments perturbateurs, par exemple de plusieurs types différents avec des distances d'espacement différentes, pour créer, dans l'écoulement, des turbulences adéquates pour aboutir à un coefficient d'échange thermique souhaité pour refroidir les composants à la température souhaitée.

Selon l'un des aspects de l'invention, l'élément perturbateur latéral fait saillie sur la paroi latérale.

Selon l'un des aspects de l'invention, l'élément perturbateur latéral présente une base qui s'étend sur la paroi latérale, sans déborder sur la paroi de fond.

Selon l'un des aspects de l'invention, l'élément perturbateur de fond fait saillie sur la paroi de fond.

Selon l'un des aspects de l'invention, l'élément perturbateur de fond présente une base qui s'étend sur la paroi de fond, sans déborder sur la paroi latérale.

Selon l'un des aspects de l'invention, les éléments perturbateurs présentent chacun une extrémité libre, à savoir ils présentent une hauteur choisie de sorte qu'ils ne viennent pas en contact avec une paroi opposée du canal.

Selon l'un des aspects de l'invention, l'élément perturbateur latéral présente une forme sensiblement cylindrique ou une forme de bossage.

Selon l'un des aspects de l'invention, l'élément perturbateur de fond présente une forme de chevron, comprenant deux branches se rejoignant entre elles en un sommet.

Selon l'un des aspects de l'invention, cet élément perturbateur de fond est orienté de sorte que l'écoulement de fluide rencontre d'abord le sommet puis est dirigé de part et d'autre des deux branches du chevron.

Ainsi le fluide peut être accéléré par cet élément perturbateur de fond.

Selon l'un des aspects de l'invention, le canal est pourvu d'une pluralité d'éléments perturbateurs latéraux et d'une pluralité d'éléments perturbateurs de fond.

Selon l'un des aspects de l'invention, les éléments perturbateurs latéraux sont présents sur les deux parois latérales, notamment en formant des paires d'éléments perturbateurs latéraux qui se font face, de part et d'autre de la paroi de fond.

En variante, les éléments perturbateurs latéraux d'une rangée sont disposés en alternance avec les éléments perturbateurs de l'autre rangée.

Selon l'un des aspects de l'invention, chaque paroi latérale est pourvue d'une rangée d'éléments perturbateurs latéraux, notamment espacés les uns des autres par un pas constant dans chaque rangée.

Selon l'un des aspects de l'invention, ces éléments perturbateurs latéraux sont tous identiques dans la rangée.

Selon l'un des aspects de l'invention, le canal présente une rangée d'éléments perturbateurs de fond, notamment espacés les uns des autres par un pas constant.

Selon un autre aspect de l'invention, le canal présente une rangée d'éléments perturbateurs de fond, notamment espacés les uns des autres par un pas variable.

Cela permet avantageusement un pas évolutif permettant d'adapter le coefficient de transfert thermique (Heat Transfer Coefficient, HTC) le long de l'écoulement.

Selon l'un des aspects de l'invention, ces éléments perturbateurs de fond sont tous identiques dans la rangée.

Selon l'un des aspects de l'invention, les rangées d'éléments perturbateurs latéraux sont décalées par rapport à la rangée d'éléments perturbateurs de fond de sorte que, suivant la direction des rangées, les éléments perturbateurs de fond sont localisés entre deux paires consécutives d'éléments perturbateurs latéraux, notamment à équidistance des deux paires consécutives d'éléments perturbateurs latéraux ou à distances différentes des paires consécutives.

Autrement dit, les éléments perturbateurs de fond ne sont pas alignés avec les éléments perturbateurs latéraux voisins.

Ceci permet d'avoir un coefficient d'échange thermique élevé, sans aggraver outre mesure les pertes de charge, grâce à cette alternance de zones de création de turbulences (du fait des éléments perturbateurs latéraux) et des et zones d'accélération du fluide (du fait d'éléments perturbateurs de fond).

Selon l'un des aspects de l'invention, la distance D, mesurée suivant une direction longitudinale, entre l'un des éléments perturbateurs de fond et l'élément perturbateur latéral voisin, respecte la relation suivante : dp-L/(2 tan(a/2)) <D<L/(2 tan(a/2))

Selon l'un des aspects de l'invention, la distance D, mesurée suivant une direction longitudinale, entre l'un des éléments perturbateurs de fond et l'élément perturbateur latéral voisin, respecte la formule plus générique suivante pour intégrer aussi la possibilité d'un pas évolutif ou/et forme de chevron évolutive :

$$ dp_{i,i+1} - \frac{L}{2\tan(\frac{a_i}{2})} < D < \frac{L}{2\tan(\frac{a_i}{2})} $$

où l'indice i fait référence au dimple de fond de canal situé en amont de l'écoulement et, l'indice i+1, au dimple consécutif situé en aval de l'écoulement, dp est le pas entre les éléments perturbateurs de fond, L la largeur de la paroi de fond du canal, et a l'angle au sommet de la forme en chevron.

Cette relation a pour conséquence que les éléments perturbateurs latéraux sont derrière le triangle formé par l'élément perturbateur de fond en forme de chevron.

Ainsi le fluide est accéléré par l'élément perturbateur de fond en forme de chevron puis des turbulences sont générées dans l'écoulement grâce aux éléments perturbateurs latéraux, à une distance suffisante du sommet du chevron.

L'invention permet d'avoir un coefficient d'échange thermique optimisé.

Selon l'un des aspects de l'invention, les éléments perturbateurs sont réalisés sur un tronçon rectiligne du canal.

Selon l'un des aspects de l'invention, le canal comporte une succession de tronçons rectilignes se raccordant entre eux par des virages.

Selon l'un des aspects de l'invention, le dispositif de régulation thermique comprend une pluralité de canaux, notamment disposés parallèlement les uns aux autres, et les canaux sont pourvus d'éléments perturbateurs arrangés comme décrit ci-dessus.

Selon l'un des aspects de l'invention, le dispositif de régulation thermique comporte une plaque supérieure et une plaque inférieure assemblée, notamment par brasage, avec la plaque supérieure pour former ensemble la pluralité de canaux de circulation pour le fluide caloporteur.

Selon l'un des aspects de l'invention, la plaque supérieure est sensiblement plane pour être mise en contact thermique avec les composants à refroidir.

Selon l'un des aspects de l'invention, les éléments perturbateurs sont réalisés sur la plaque inferieure, notamment par emboutissage, estampage ou fabrication additive métallique.

Selon l'un des aspects de l'invention, les trapèzes des contours de canaux sont des trapèzes isocèles.

Selon l'un des aspects de l'invention, les modules à refroidir présentent une base de forme rectangulaire.

L'invention a également pour objet un ensemble comportant au moins deux composants électriques susceptibles de dégager de la chaleur lors de son fonctionnement, notamment au moins un module de stockage d'énergie électrique, et un dispositif de régulation thermique tel que décrit plus haut agencé pour refroidir ces composants placés respectivement sur le dispositif de régulation thermique.

Le module est par exemple un bloc de batterie de véhicule automobile.

D'autres caractéristiques et avantages de l'invention apparaitront plus clairement à la lecture de la description suivante, donnée à titre d'exemple illustratif et non limitatif, et des dessins annexés parmi lesquels :

- la [Figure 1] illustre, schématiquement et partiellement, un dispositif de régulation thermique selon un exemple de réalisation de l'invention ;

- la [Figure 2] illustre, schématiquement et partiellement, une coupe transversale de la plaque inférieure du dispositif de la [Figure 1],

- la [Figure 3] illustre, schématiquement et partiellement, la disposition des éléments perturbateurs d'un canal du dispositif de la [Figure 1].

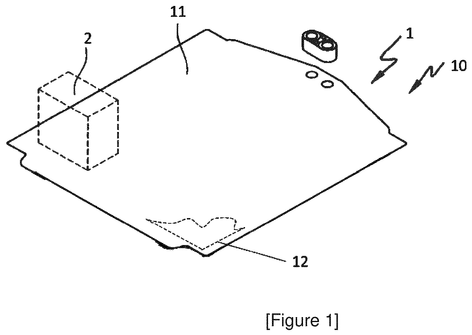

On a représenté sur la figure 1 ensemble 1 comportant un module 2 de cellules de batterie à refroidir, d'un véhicule automobile.

Les cellules de batterie comprennent par exemple une pluralité de batteries au lithium-ion (Li-ion) pour une utilisation dans un véhicule hybride. Dans un autre mode de réalisation, la pluralité de cellules de batterie sont des batteries Li-ion pour une utilisation dans un véhicule électrique à batterie.

L'ensemble 1 comprend en outre un dispositif de régulation thermique 10 agencé pour refroidir les cellules du module 2, qui sont en contact thermique avec une plaque supérieure du dispositif de refroidissement 10, comme expliqué plus bas.

Le dispositif de régulation thermique 10 comporte une plaque supérieure 11, une plaque inférieure 12 assemblée avec la plaque supérieure 11 pour former ensemble une pluralité de canaux 14 de circulation pour un fluide caloporteur, ici un fluide réfrigérant choisi parmi les fluides réfrigérants suivants R134a, R1234yf ou R744.

Les plaques 11 et 12 sont réalisées en aluminium.

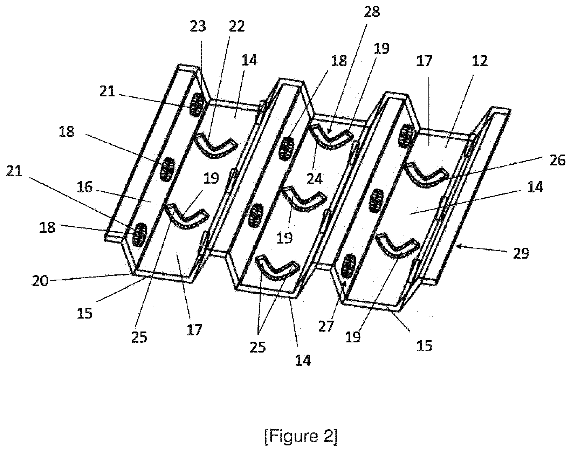

Comme on peut le voir sur la figure 2, les canaux de circulation 14 pour le fluide caloporteur présentent chacun, en section transversale, un contour 15 sensiblement en trapèze avec deux parois latérales 16 et une paroi de fond 17, cette paroi de fond 17 correspondant à une petite base du trapèze.

Le canal 14 est pourvu, sur ses parois latérales 16, d'une pluralité éléments perturbateurs latéraux 18 de l'écoulement du fluide caloporteur dans ce canal 14, et, sur la paroi de fond 17, d'une pluralité d'éléments perturbateurs de fond 19.

Ces éléments perturbateurs 18 et 19 sont distants les uns des autres.

Les coins 20 du trapèze peuvent être anguleux ou arrondis.

Chaque élément perturbateur latéral 18 fait saillie sur la paroi latérale 16, et présente une base 21 qui s'étend sur la paroi latérale 16, sans déborder sur la paroi de fond 17.

Chaque élément perturbateur de fond 19 fait saillie sur la paroi de fond 17, et présente une base 22 qui s'étend sur la paroi de fond 17, sans déborder sur les parois latérales 16.

Les éléments perturbateurs respectivement 18 et 19 présentent chacun une extrémité libre respectivement 23 et 24, à savoir ils présentent une hauteur choisie de sorte qu'ils ne viennent pas en contact avec une paroi opposée du canal.

Chaque élément perturbateur latéral 18 présente une forme sensiblement cylindrique avec une base 21 de contour circulaire, pour générer des turbulences dans l'écoulement de fluide.

Chaque élément perturbateur de fond19 présente une forme de chevron, comprenant deux branches 25 se rejoignant entre elles en un sommet 26, orienté de sorte que l'écoulement de fluide rencontre d'abord le sommet 26 puis est dirigé de part et d'autre des deux branches 25 du chevron, pour provoquer localement une accélération de l'écoulement du fluide caloporteur.

Les éléments perturbateurs latéraux 18 sont présents sur les deux parois latérales 16, en formant des paires d'éléments perturbateurs latéraux 18 qui se font face, de part et d'autre de la paroi de fond 17.

Chaque paroi latérale 16 est pourvue d'une rangée 27 d'éléments perturbateurs latéraux 18, espacés les uns des autres par un pas constant dans chaque rangée.

Ces éléments perturbateurs latéraux 18 sont tous identiques dans chaque rangée 27.

Le canal 14 présente une rangée 28 d'éléments perturbateurs de fond 19, espacés les uns des autres par un pas constant.

Ces éléments perturbateurs de fond 19 sont tous identiques dans chaque rangée 28.

Les rangées 27 d'éléments perturbateurs latéraux 18 sont décalées par rapport à la rangée 28 d'éléments perturbateurs de fond 19 de sorte que, suivant la direction X des rangées, les éléments perturbateurs de fond 19 sont localisés entre deux paires consécutives d'éléments perturbateurs latéraux 18.

Les éléments perturbateurs de fond 19 ne sont pas alignés avec les éléments perturbateurs latéraux 19 voisins, mais décalés suivant la direction X.

Ceci permet d'avoir un coefficient d'échange thermique élevé, sans aggraver outre mesure les pertes de charge, grâce à cette alternance de zones de création de turbulences (du fait des éléments perturbateurs latéraux 18) et des et zones d'accélération du fluide (du fait d'éléments perturbateurs de fond 19).

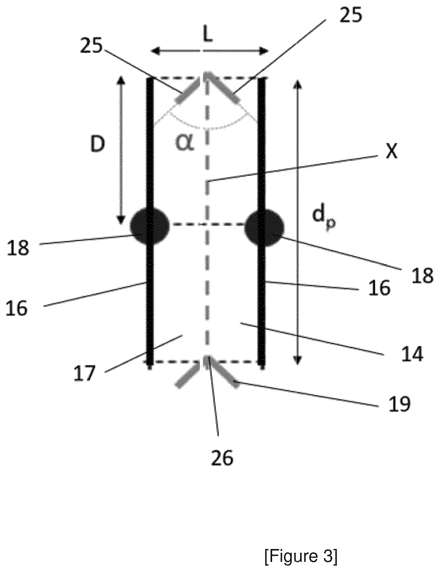

Comme illustré sur la figure 3, la distance D, mesurée suivant la direction longitudinale X, entre l'un des éléments perturbateurs de fond 19 et l'élément perturbateur latéral 18 voisin, respecte la relation suivante : dp-L/(2 tan(a/2)) <D<L/(2 tan(a/2)) où dp est le pas entre les éléments perturbateurs de fond 19, L la largeur de la paroi de fond 17 du canal, a l'angle au sommet 26 de la forme en chevron.

Cette relation a pour conséquence que les éléments perturbateurs latéraux 18 sont derrière le triangle formé par l'élément perturbateur de fond 19 en forme de chevron.

Les éléments perturbateurs 18 et 19 sont réalisés sur un tronçon rectiligne 29 du canal 14.

Les éléments perturbateurs 18 et 19 sont réalisés sur la plaque inferieure, notamment par emboutissage, estampage ou fabrication additive métallique.

Par exemple, le canal 14 comporte une succession de tronçons rectilignes 29 se raccordant entre eux par des virages.

Le dispositif de régulation thermique 10 comprend une pluralité de canaux 14, disposés parallèlement les uns aux autres, et les canaux 14 sont pourvus d'éléments perturbateurs 18 et 19 arrangés comme décrit ci-dessus.

La plaque supérieure 11 est sensiblement plane pour être mise en contact thermique avec les composants 2 à refroidir.

Les trapèzes des contours de canaux 14 sont des trapèzes isocèles.

La paroi de fond 17 est à l'opposé à la plaque supérieure 11.

## Revendications

1. Dispositif de régulation thermique (10), notamment de refroidissement, pour composant électrique (2) susceptible de dégager de la chaleur lors de son fonctionnement, notamment pour un module de stockage d'énergie électrique, le dispositif comportant au moins un canal (14) de circulation pour un fluide caloporteur et présentant, en section transversale, un contour sensiblement en trapèze avec deux parois latérales (16) et une paroi de fond (17), cette paroi de fond correspondant à une petite base du trapèze, ce canal étant pourvu, sur l'une au moins de ses parois latérales, d'un élément perturbateur latéral (18) de l'écoulement du fluide caloporteur dans ce canal, l'élément perturbateur latéral (18) présentant une forme choisie pour générer des turbulences dans l'écoulement de fluide le dispositif étant **caractérisé en ce qu'**il est pourvu, sur la paroi de fond, d'un élément perturbateur de fond (19) présentant une forme choisie pour provoquer localement une accélération de l'écoulement du fluide caloporteur, ces éléments perturbateurs (18, 19) étant distants l'un de l'autre.

2. Dispositif selon la revendication précédente, dans lequel l'élément perturbateur latéral (18) fait saillie sur la paroi latérale.

3. Dispositif selon l'une des revendications précédentes, dans lequel l'élément perturbateur de fond (19) fait saillie sur la paroi de fond (17).

4. Dispositif selon la revendication précédente, dans lequel l'élément perturbateur de fond (19) présente une forme de chevron, comprenant deux branches (25) se rejoignant entre elles en un sommet (26).

5. Dispositif selon l'une des revendications précédentes, dans lequel les rangées (27) d'éléments perturbateurs latéraux (18) sont décalées par rapport à la rangée (28) d'éléments perturbateurs de fond (19) de sorte que, suivant la direction (X) des rangées, les éléments perturbateurs de fond sont localisés entre deux paires consécutives d'éléments perturbateurs latéraux.

6. Dispositif selon l'une des revendications précédentes, dans lequel la distance D, mesurée suivant la direction longitudinale (X), entre l'un des éléments perturbateurs de fond (19) et l'élément perturbateur latéral (18) voisin, respecte la relation suivante : dp-L/(2 tan($\alpha$/2)) <D<L/(2 tan($\alpha$/2)) où dp est le pas entre les éléments perturbateurs de fond, L la largeur de la paroi de fond du canal, et $\alpha$ l'angle au sommet de la forme en chevron.

7. Dispositif selon l'une des revendications 1 à 6, dans lequel la distance D, mesurée suivant une direction longitudinale, entre l'un des éléments perturbateurs de fond et l'élément perturbateur latéral voisin, respecte la relation suivante :

$$dp_{i,i+1} - \frac{L}{2\tan\left(\frac{\alpha_i}{2}\right)} < D < \frac{L}{2\tan\left(\frac{\alpha_i}{2}\right)}$$

8. Dispositif selon l'une des revendications précédentes, dans lequel le dispositif de régulation thermique comporte une plaque supérieure (11) et une plaque inférieure (12) assemblée, avec la plaque supérieure pour former ensemble la pluralité de canaux de circulation pour le fluide caloporteur.

9.  Ensemble (1) comportant au moins deux composants électriques susceptibles de dégager de la chaleur lors de son fonctionnement, et un dispositif de régulation thermique selon l'une des revendications précédentes, agencé pour refroidir ces composants (2) placés respectivement sur le dispositif de régulation thermique.

**Patentansprüche**

1.  Thermische Regulierungsvorrichtung (10), insbesondere zur Kühlung, für ein elektrisches Bauteil (2), das während seines Betriebs Wärme abgeben kann, insbesondere für ein elektrisches Energiespeichermodul, wobei die Vorrichtung mindestens einen Strömungskanal (14) für ein Wärmeträgerfluid aufweist und im Querschnitt eine im Wesentlichen trapezförmige Kontur mit zwei Seitenwänden (16) und einer Bodenwand (17) aufweist, wobei diese Bodenwand einer kleinen Basis des Trapezes entspricht, wobei dieser Kanal an mindestens einer seiner Seitenwände mit einem seitlichen Störelement (18) für die Strömung des Wärmeträgerfluids in diesem Kanal versehen ist, wobei das seitliche Störelement (18) eine Form aufweist, die gewählt ist, um Turbulenzen in der Fluidströmung zu erzeugen, **dadurch gekennzeichnet, dass** die Vorrichtung an der Bodenwand mit einem Bodenstörelement (19) versehen ist, das eine Form aufweist, die gewählt ist, um lokal eine Beschleunigung der Strömung des Wärmeträgerfluids zu bewirken, wobei diese Störelemente (18, 19) voneinander beabstandet sind.

2.  Vorrichtung nach dem vorhergehenden Anspruch, bei der das seitliche Störelement (18) an der Seitenwand vorsteht.

3.  Vorrichtung nach einem der vorhergehenden Ansprüche, bei der das Bodenstörelement (19) an der Bodenwand (17) vorsteht.

4.  Vorrichtung nach dem vorhergehenden Anspruch, bei der das Bodenstörelement (19) eine Chevronform aufweist, die zwei Zweige (25) umfasst, die an einer Spitze (26) zusammenlaufen.

5.  Vorrichtung nach einem der vorhergehenden Ansprüche, bei der die Reihen (27) von seitlichen Störelementen (18) gegenüber der Reihe (28) von Bodenstörelementen (19) versetzt sind, sodass in Richtung (X) der Reihen die Bodenstörelemente zwischen zwei aufeinanderfolgenden Paaren von seitlichen Störelementen angeordnet sind.

6.  Vorrichtung nach einem der vorhergehenden Ansprüche, bei der der Abstand D, gemessen in Längsrichtung (X), zwischen einem der Bodenstörelemente (19) und dem benachbarten seitlichen Störelement (18) die folgende Beziehung erfüllt: dp-L/(2 tan(a/2)) <D<L/(2 tan(a/2)), wobei dp der Abstand zwischen den Bodenstörelementen ist, L die Breite der Bodenwand des Kanals und a der Winkel an der Spitze der Chevronform.

7.  Vorrichtung nach einem der Ansprüche 1 bis 6, bei der der Abstand D, gemessen in Längsrichtung, zwischen einem der Bodenstörelemente und dem benachbarten seitlichen Störelement die folgende Beziehung erfüllt:

$$dp_{i,i+1} - \frac{L}{2\tan\left(\frac{\alpha_i}{2}\right)} < D < \frac{L}{2\tan\left(\frac{\alpha_i}{2}\right)}$$

8.  Vorrichtung nach einem der vorhergehenden Ansprüche, bei der die thermische Regulierungsvorrichtung eine obere Platte (11) und eine untere Platte (12) aufweist, die mit der oberen Platte zusammengebaut ist, um gemeinsam die Vielzahl von Strömungskanälen für das Wärmeträgerfluid zu bilden.

9.  Anordnung (1), die mindestens zwei elektrische Bauteile, die während ihres Betriebs Wärme abgeben können, und eine thermische Regulierungsvorrichtung nach einem der vorhergehenden Ansprüche umfasst, die angeordnet ist, um diese Bauteile (2) zu kühlen, die jeweils auf der thermischen Regulierungsvorrichtung platziert sind.

**Claims**

1.  Thermal regulation device (10), particularly for cooling, for an electrical component (2) likely to release heat during its operation, particularly for an electrical energy storage module, the device comprising at least one circulation channel (14) for a heat transfer fluid and having, in cross-section, a substantially trapezoidal contour with two lateral walls (16) and a bottom wall (17), this bottom wall corresponding to a small base of the trapezoid, this channel being provided, on at least one of its lateral walls, with a lateral disturbing element (18) of the heat transfer fluid flow in this channel, the lateral disturbing element (18) having a shape chosen to generate turbulence in the fluid flow, the device being **characterized in that** it is provided, on the bottom wall, with a bottom disturbing element (19) having a shape chosen to locally cause an acceleration of the heat transfer fluid flow, these disturbing elements (18, 19) being distant from each other.

2. Device according to the preceding claim, in which the lateral disturbing element (18) protrudes on the lateral wall.

3. Device according to one of the preceding claims, in which the bottom disturbing element (19) protrudes on the bottom wall (17).

4. Device according to the preceding claim, in which the bottom disturbing element (19) has a chevron shape, comprising two branches (25) joining each other at a vertex (26).

5. Device according to one of the preceding claims, in which the rows (27) of lateral disturbing elements (18) are offset from the row (28) of bottom disturbing elements (19) so that, along the direction (X) of the rows, the bottom disturbing elements are located between two consecutive pairs of lateral disturbing elements.

6. Device according to one of the preceding claims, in which the distance D, measured along the longitudinal direction (X), between one of the bottom disturbing elements (19) and the neighboring lateral disturbing element (18), respects the following relation: dp-L/(2 tan(a/2)) <D<L/(2 tan(a/2)) where dp is the pitch between the bottom disturbing elements, L the width of the bottom wall of the channel, and a the vertex angle of the chevron shape.

7. Device according to one of claims 1 to 6, in which the distance D, measured along a longitudinal direction, between one of the bottom disturbing elements and the neighboring lateral disturbing element, respects the following relation:

$$dp_{i,i+1} - \frac{L}{2\tan\left(\frac{\alpha_i}{2}\right)} < D < \frac{L}{2\tan\left(\frac{\alpha_i}{2}\right)}$$

8. Device according to one of the preceding claims, in which the thermal regulation device comprises an upper plate (11) and a lower plate (12) assembled with the upper plate to form together the plurality of circulation channels for the heat transfer fluid.

9. Assembly (1) comprising at least two electrical components likely to release heat during its operation, and a thermal regulation device according to one of the preceding claims, arranged to cool these components (2) placed respectively on the thermal regulation device.

[Figure 1]

[Figure 2]

[Figure 3]

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2018109368 A
- EP 2828922 B1
- WO 12126111 A